# EUROPEAN PATENT APPLICATION

(11) **EP 1 439 700 A1**
(43) Date of publication of application: **21.07.2004**
(21) Application number: 03000899.9
(22) Date of filing: 16.01.2003
(51) Int. Cl.: H04N 7/24

(54) **Method of assigning an absolute time value to an entry point of a data stream sequence**

(71) Applicant: DEUTSCHE THOMSON-BRANDT GMBH, 78048 Villingen-Schwenningen (DE)
(72) Inventor: Klausberger, Wolfgang, 30559 Hannover (DE); Kubsch, Stefan, 31559 Hohnhorst (DE); Ostermann, Ralf, 30167 Hannover (DE); Kochale, Axel, 31832 Springe (DE); Blawat, Meinolf, 30659 Hannover (DE)
(74) Representative: Hartnack, Wolfgang, Dipl.-Ing.

(57) **Abstract**

The invention relates to assigning a first absolute time value to an entry point, the entry point being located at a first position in a data stream sequence, the data stream having data packets with relative time stamps. A second absolute time value is provided for a second position of the data stream sequence. The absolute time value is determined for the entry point based on the second absolute time value and the relative time stamps of data packets between the first and second positions.

## Description

The invention relates to the field of digital data streams, such as DVR, DVD and DVB data streams.

### Background

A variety of digital data stream formats is known. For example, DVD is a multi-application family of optical disc formats for read-only, recordable and re-writable applications. DVD stands for 'digital versatile disc' but is often referred to as 'digital video disc'. The corresponding data stream formats have been standardised by the DVD forum (www.dvdforum.org).

DVR and DVB are additional examples for digital data stream formats. Usually such digital data stream formats are based on MPEG-type packetised data. In an MPEG-type data stream the data packets are time stamped relative to a system clock reference.

### Invention

It is a common disadvantage of prior art digital data streams that there is a lack of an absolute time value for the entry points of the data stream. In particular this represents a problem for conveniently editing of data stream sequences with respect to an absolute time axis which is understandable by a human.

The invention aims to provide for an improved method of assigning absolute time values to entry points of a digital data stream as well as to provide for corresponding computer program products and electronic devices.
A corresponding method is disclosed in claim 1. An electronic device that utilises this method is disclosed in claim 10. A corresponding computer program product is disclosed in claim 9.

According to the invention, an absolute time value is assigned to an entry point of a data stream sequence on the basis of an absolute reference time. The absolute reference time value can be provided as part of the digital data stream itself or it can be obtained from an external data source such as via teletext or from an internet website. The absolute time value of the entry point is determined based on the absolute reference time and the relative timestamp information of data packets between the absolute reference time and the entry point. This is a particular advantage for performing editing operations.

In accordance with a preferred embodiment of the invention a table is generated for relating entry points to absolute time values. It is a particular advantage of the invention that this table can cover multiple data stream sequences, which can even be spaced apart on the absolute time axis. In other words, the invention enables mapping multiple data stream sequences on to the same absolute time axis even if the system clock is non-continuous.

In principle, the inventive method is suited for assigning a first absolute time value to an entry point, wherein the entry point is located at a first position in a data stream sequence, and the data stream having data packets with relative time stamps, said method including the steps of:
- providing a second absolute time value for a second position of the data stream sequence,
- determining the absolute time value for the entry point based on the second absolute time value and the relative time stamps of data packets between the first and second positions.

In principle the inventive electronic device is suited for receiving a data stream having data packets with relative timestamps, said device including:
- means for providing a reference absolute time value for a reference position of a data stream sequence of said data stream;
- means for determining an absolute time value for an entry point of said data stream sequence based on the reference absolute time value and the relative time stamps of data packets between the reference position and a position of the entry point in said data stream sequence.

Advantageous additional embodiments of the invention are disclosed in the respective dependent claims.

### Drawings

Exemplary embodiments of the invention are described with reference to the accompanying drawings, which show in:
- Fig. 1: Diagram illustrative of an application of the invention to DVB;
- Fig. 2: Flow chart of a preferred embodiment of the invention;
- Fig. 3: Playback of multi-stream recording.

### Exemplary embodiments

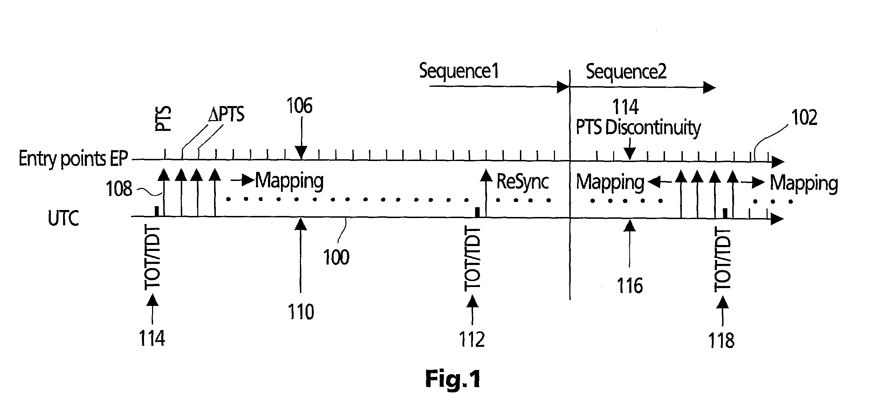

Figure 1 illustrates the mapping of entry points (EP) of a DVB data stream to an UTC-time axis 100. The entry points are located on relative time axis 102 provided by the DVB data stream. In the example considered here two different video programs are recorded in sequence 1 and sequence 2, respectively. There can be a time gap between the sequences 1 and 2 on the UTC-time axis 100.
When the data stream is recorded the DVB service information (DVB-SI) section packets are parsed. This way the time and date table (TDT) and the time offset table (TOT) are obtained. These tables contain a UTC-time, date information and the local offset. The data stream sequences contain data packets which are time stamped. In accordance with MPEG-2 Systems specification ISO/IEC 13818-1, the timestamps are increments of Δt = 1/90kHz =11.11 µs. The corresponding timestamps are also referred to as presentation timestamps (PTS).
When recording a DVB transport stream the incoming multiplex is parsed and the resulting information is stored on the disc. The parser extracts a list of entry points with corresponding presentation timestamps of the packetised elementary stream (PES) header, the corresponding source packet numbers (SPN) and the type of the stream (e.g. video). These entry points indicate extreme packet positions where the decoding process can start.
An absolute time value is determined for an entry point of sequence 1 on the basis of an absolute time on UTC-time axis 100 provided by TDT/TOT plus the relative time increments of the timestamps of the data packets between the entry point and the last absolute UTC-time axis position.
For example, an absolute time value 104 is provided on the UTC-time axis 100 by TOT/TDT. An absolute time value 110 for entry point 106 of sequence 1 is obtained by adding increments of PTS for each received data packet 108 to the absolute time value 104 until the entry point 106 is reached. This process can be performed with respect to all entry points to provide a mapping of all entry points onto the UTC-time axis 100.
A consecutive absolute time value 112 on the UTC-time axis 100 provided by TOT/TDT of the data stream is used for re-synchronisation. In other words, the absolute time value 112 replaces the preceding absolute time value 104 for the purposes of the mapping of entry points to the UTC-time axis 100.

After sequence 1 has been recorded and mapped sequence 2 starts. Between sequence 1 and sequence 2 there can be a gap resulting in a PTS discontinuity. Despite the PTS discontinuity the invention enables accurate mapping of the entry points of sequence 2 on to the same UTC-time axis 100 as of the entry points of sequence 1. This is accomplished by taking only absolute time values provided by TOT/TDT of sequence 2 into consideration.
For example, absolute time value 116 on UTC-time axis 100 is obtained for entry point 114 of sequence 2 by using absolute time value 118 provided by the first TOT/TDT of sequence 2 as a reference. Absolute time value 116 is obtained by decrementing absolute time value 118 by decrements of PTS. Likewise entry points of sequence 2 which are subsequent to absolute time value 118 also use this time value as a reference by incrementing absolute time value 118 by the number of PTS increments between absolute time value 118 and the corresponding entry point.
This way a table containing all entry points and the assigned absolute time values can be obtained and stored. Such a table greatly facilitates any editing operation as it enables an intuitive display of the recorded programme sequences along an absolute time axis. This is especially useful for an editing process where it is necessary to determine the start and end times of a recording corresponding to picture boundaries in the real-time video data.

On average the TOT/TDT sections are transmitted in the DVB multiplex every 20 seconds. Every TOT/TDT will be used for a re-synchronisation of the mapping to avoid a drift between UTC and the mapped DVB system clock. In case of PTS-discontinuities (e.g. change of program sequences) the mapping for the preceding entry points will be done after the first TOT/TDT has occurred. The Δt values of the preceding entry points will be taken from the entry point map.

As an alternative to provide an absolute time reference via the data stream itself a separate channel can be used. Beside the absolute time values also information about the start-time and the duration of an event (sequence) are transmitted (e.g. in the DVB-SI event information table EIT or in the teletext data field). Together with the mapped time codes those information can be used to ease editing processes for recording. Further information available on the Internet, such as an Internet TV guide, can be used for such a purpose. In this instance a link is provided to the recording device from where the recording device can obtain the absolute start-time information of a particular program to be recorded.

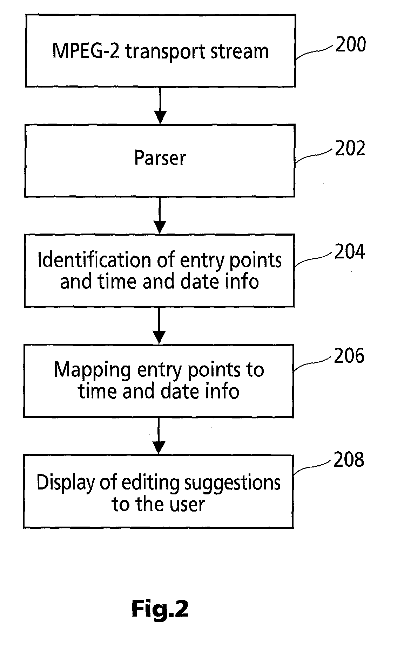

Figure 2 illustrates a corresponding flow chart. In step 200 an MPEG-2 transport stream is received by a recording device. The stream is parsed in step 202 for identification of entry points and TDT/TOT information in step 204. In step 206 the identified entry points are mapped onto an absolute time axis in accordance with the principles as explained with reference to Fig. 1. This way a table results including the entry points and assigned absolute time values.
This table is used in step 208 for interactively editing the recorded sequences. Preferably a graphically user interface is used for such an editing operation. A representation of the absolute time-axis can be displayed with related entry points to facilitate the editing process.

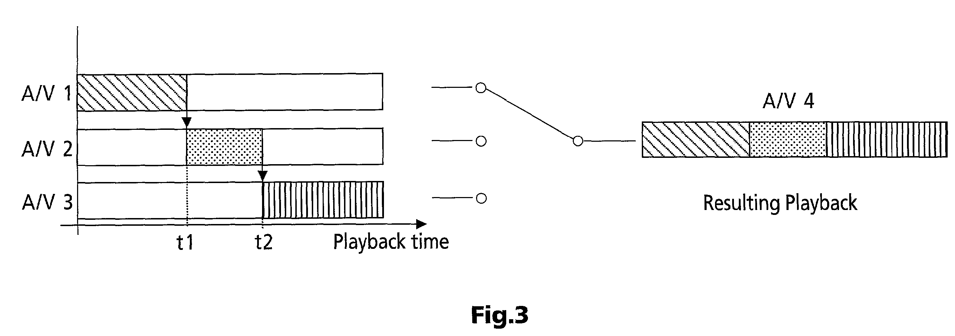

The invention can be used for recording and playing back multi-stream/multi-angle A/V streams. A playback of the recording behaves like a corresponding real-time transmission or broadcast. Advantageously, it is possible to switch in an unbounded manner between the different AV streams. Fig. 3 illustrates the playback of a multi-stream recording. Three A/V streams A/V 1, A/V 2 and A/V 3 have been recorded before. During playback time it is switched from A/V 1 to A/V 2 at time instant t1, and from A/V 2 to A/V 3 at time instant t2. The resulting AV stream is shown as A/V 4.

Furthermore the invention allows dividing the above-mentioned stream into sub-streams, allowing different digital recorders to record these sub-streams. The system time is to be synchronised in each one of these digital recorders. Following recording, the streams can be combined, advantageously allowing the above-described type of playback.

## Claims

1. Method of assigning a first absolute time value (104) to an entry point, wherein the entry point is located at a first position in a data stream sequence, and the data stream having data packets (108) with relative time stamps, said method including the steps of:
- providing a second absolute time value (110) for a second position of the data stream sequence,
- determining the absolute time value for the entry point (106, 114) based on the second absolute time value (110, 116) and the relative time stamps of data packets between the first and second positions.

2. Method according to claim 1, including the step of generating a table comprising entry points of at least first and second data stream sequences, said entry points having assigned thereto absolute time values.

3. Method according to claim 1 or 2, including the steps:
- receiving first and second data stream sequences;
- providing second absolute time values for said first and said second data stream sequences;
- using said second absolute time values of said first data stream sequence to determine the first absolute time value of a first entry point of said first data stream sequence;
- using said second absolute time value of said second data stream sequence to determine the first absolute time value of a second entry point of said second data stream sequence.

4. Method according to one of claims 1 to 3, wherein said second absolute time value is received as part of the data stream sequence.

5. Method according to one of claims 1 to 3, wherein said second absolute time value is received via a separate channel.

6. Method according to claim 5, wherein said separate channel is a teletext or Internet channel.

7. Method according to one of claims 1 to 6, the relative timestamps being MPEG-type timestamps.

8. Method according to one of claims 1 to 7, the data stream being a DVR, DVD or DVB-type data stream.

9. Computer program product, in particular digital storage medium, including program means for performing the steps of:
- providing a second absolute time value (110, 116) for a second position of a data stream sequence in addition to a first position (104) in said data stream sequence, said data stream sequence having data packets with relative time stamps,
- determining the absolute time value for the entry point (106, 114) based on said second absolute time value and the relative time stamps of data packets between the first and second positions.

10. Electronic device for receiving a data stream having data packets with relative timestamps, said device including:
- means for providing a reference absolute time value for a reference position of a data stream sequence of said data stream;
- means for determining an absolute time value (110, 116) for an entry point (106, 114) of said data stream sequence based on the reference absolute time value and the relative time stamps of data packets between the reference position and a position of the entry point in said data stream sequence.

11. Device according to claim 10, the device being a DVR, DVD, DVB player and/or recorder.

12. Device according to claim 10 or 11, further including means for editing of first and second data stream sequences by making reference to an absolute time axis.
